# EUROPÄISCHE PATENTANMELDUNG

(11) **EP 0 716 207 A2**
(43) Veröffentlichungstag der Anmeldung: **12.06.1996**
(21) Anmeldenummer: 95116670.1
(22) Anmeldetag: 23.10.1995
(51) Int. Cl.: E06B 3/663, B23D 45/14

(54) **Vorrichtung zur Bildung einer winkelförmigen Ausnehmung in einem Profilstab**

(30) Priorität: 26.10.1994 DE 4438284
(71) Anmelder: Galac, Ladislaus, A-4052 Ansfelden (AT); Galac, Andreas Peter, A-4052 Ansfelden (AT)
(72) Erfinder: Galac, Ladislaus, A-4052 Ansfelden (AT); Galac, Andreas Peter, A-4052 Ansfelden (AT)
(74) Vertreter: Haft, von Puttkamer, Berngruber, Czybulka

(57) **Zusammenfassung**

Zur Bildung einer winkelförmigen Ausnehmung in einem dünnwandigen Profilstab sind zwei Sägen mit rotierenden Sägeblättern vorgesehen. Die Sägen sind dabei so ausgerichtet, daß die Sägeblätter den Schnitt zur Bildung der einen bzw. anderen Seite der winkelförmigen Aussparung in den Profilstab durchführen. Die Sägen sind in Schlittenbewegungsrichtung hintereinander angeordnet, wobei die beiden Sägeblätter zur Bildung einer gemeinsamen Schneidlinie eine gemeinsame, parallel zur Schlittenbewegungsrichtung verlaufende Tangente aufweisen.

## Beschreibung

Die Erfindung bezieht sich auf eine Vorrichtung zur Bildung einer winkelförmigen Ausnehmung in einem dünnwandigen Profilstab nach dem Oberbegriff des Anspruchs 1.

Ein derartiger dünnwandiger Profilstab wird z. B. zur Herstellung des Abstandshalterrahmens einer Isolierscheibe verwendet. Dazu wird der an den Seitenwänden mit einer klebrigen Dichtmasse versehene, als Hohlprofil ausgebildete Profilstab mit einer dem Rahmen entsprechenden Länge an den Stellen, die die Ecken des Rahmens bilden sollen, mit solchen winkelförmigen Ausnehmungen zur Bildung einer Gehrung versehen, und zwar so, daß die Außenwand des Hohlprofils an den Ausnehmungen stehenbleibt. Die stehengebliebene Außenwand an den Ausnehmungen wird dann zur Bildung der Ecken geknickt, worauf die Enden des Profilstabs mit einem Verbindungsstück verbunden werden. Der Profilstab besteht im allgemeinen aus Aluminium oder einer Aluminiumlegierung. Die Dicke der Außen- und Innenwand des Hohlprofils beträgt 1 mm oder weniger, die Dicke der durchzutrennenden Seitenwände z. B. vorzugsweise 0,3 bis 0,6 mm.

Die Breite des Profils kann z. B. zwischen 5 und 25 mm schwanken und die Höhe zwischen 5 und 30 mm.

Aus der DE 44 01 667 A1 ist eine Vorrichtung gemäß dem Oberbegriff des Anspruchs 1 zur Bildung der Gehrungsausnehmungen eines solchen Abstandshalterrahmens bekannt. Als Trenneinrichtung wird dabei ein Fräser verwendet, wobei die Breite der Frässcheibe am Zylinderumfang wenigstens der Länge einer Seite der Gehrungsausnehmung entspricht.

Mit der bekannten Vorrichtung entsteht an der Gehrungsausnehmung ein Grat, der in einem gesonderten Arbeitsgang entfernt werden muß. Denn ein solcher Grat an der Ecke des Abstandshalterrahmens würde zur Undichtigkeit der Isolierscheibe führen.

Aufgabe der Erfindung ist es, eine Vorrichtung zur Bildung einer winkelförmigen Ausnehmung an einem dünnen Profilstab bereitzustellen, insbesondere einem Hohlprofilstab zur Herstellung des Abstandshalterrahmens einer Isolierscheibe.

Dies wird erfindungsgemäß mit der im Anspruch 1 gekennzeichneten Vorrichtung erreicht. In den Unteransprüchen 2 bis 5 sind vorteilhafte Ausgestaltungen dieser Vorrichtung angegeben und im Anspruch 6 eine bevorzugte Verwendung derselben.

Bei der erfindungsgemäßen Vorrichtung werden zwei Sägen mit rotierenden Sägeblättern verwendet, wobei die eine Säge den einen und die andere Säge den anderen winkelförmigen Schnitt zur Bildung der winkel- oder keilförmigen Ausnehmung durchführt.

Wenn zwei Sägeblätter entsprechend der winkelförmigen Ausnehmung V-förmig angeordnet sind und ihre Drehachsen in einer Ebene liegen, bildet sich, wenn man sich die Sägeblätter als Scheiben mit zylindrischer Mantelfläche vorstellt, ein freibleibender Zwickel, d. h. es bleibt Material an der Spitze der winkelförmigen Ausnehmung stehen. Durch dieses Material in der Ausnehmung ist keine saubere Gehrung beim Abwinkeln der Außenwand des Hohlprofils herstellbar. Demgemäß sind erfindungsgemäß die beiden Sägen in Schlittenbewegungsrichtung hintereinander angeordnet, und zwar so, daß die Sägeblätter der beiden Sägen zur Bildung einer gemeinsamen Schneidlinie eine gemeinsame parallel zur Schlittenbewegungsrichtung verlaufende Tangente besitzen.

An sich ist die Gratbildung um so geringer, je kleiner die Zähne des Sägeblatts sind. Andererseits muß die Umfangsgeschwindigkeit des Sägeblatts möglichst groß sein, damit der Schnitt in sehr kurzer Zeit ausgeführt werden kann. Es hat sich nämlich gezeigt, daß auch ein feines Sägeblatt zur Gratbildung führen kann, wenn die Schneiddauer zunimmt. Dies dürfte darauf zurückzuführen sein, daß sich das Material bei zunehmender Schneiddauer an der Schnittstelle erwärmt und sich das erwärmte Material zu einem Grat verformt. Zudem besteht dann die Gefahr, daß insbesondere feine Späne an den Zähnen durch Anschmelzen festkleben, so daß die Leistung der Säge weiter abnimmt und damit die Schnittdauer und Erwärmung und entsprechend die Klebetendenz weiter anwächst.

Trenn- oder Winkelschleifer, also Sägen, bei denen eine glatte Stahlscheibe mit relativ kleinem Durchmesser das Werkstück mittels Reibungswärme durchschmilzt, besitzen eine sehr hohe Umlaufgeschwindigkeit.

Erfindungsgemäß wird vorzugsweise ein Trennschleifer als Säge verwendet, jedoch mit einem dünnen Sägeblatt anstelle der glatten Stahlscheibe. Die hohe Umlaufgeschwindigkeit eines Trennschleifers führt zu einer sehr kurzen Schnittzeit und damit zur Verhinderung der Gratbildung durch Materialerwärmung.

Aufgrund der hohen Umlaufgeschwindigkeit kann das Sägeblatt einen kleinen Durchmesser aufweisen.Durch den relativ geringen Durchmesser kann es wiederum sehr dünn ausgebildet werden. Aufgrund der geringen Breite der Zähne des dünnen Sägeblatts wird die Gratbildung weiter zurückgedrängt.

Vorzugsweise liegt der Durchmesser der Sägeblätter erfindungsgemäß bei etwa 50 bis 100 mm. Die Drehzahl liegt vorzugsweise bei 20000 Umdrehungen pro Minute und mehr.

Druckluftbetriebene Winkel- oder Trennschleifer werden bevorzugt. Denn druckluftbetriebene Winkelschleifer weisen eine hohe Drehzahl und Leistungsstärke auf. D. h., sie führen auch bei kleinen Zähnen zu einem sehr schnellen Schnitt ohne größere Materialerwärmung. Zudem sind druckluftbetriebene Winkelschleifer problemloser, insbesondere wartungsfreier, betriebssicherer sowie gefahrloser und damit mit weniger Auflagen verbunden als elektrisch angetriebene Trennschleifer.

Wie bei Sägen für Aluminium und dergleichen Weichmetallen üblich, weist das Sägeblatt vorzugsweise eine Negativverzahnung auf.

Zum Sägen von Hohlprofilen aus anderen Metallen kann es jedoch auch mit einer progressiven Verzahnung versehen sein.

Die erfindungsgemäße Vorrichtung ist insbesondere zur Bildung einer winkelförmigen Ausnehmung in einem dünnwandigen Profilstab aus Aluminium oder einer Aluminiumlegierung bestimmt. Sie kann jedoch auch für dünnwandige Profilstäbe aus anderen Metallen oder nichtmetallischen Werkstoffen, wie Kunststoff, verwendet werden.

Nicht zuletzt aufgrund der kleinen Trennschleifer zeichnet sich die erfindungsgemäße Vorrichtung durch große Handlichkeit und Wirtschaftlichkeit aus.

Nachstehend ist eine Ausführungsform der erfindungsgemäßen Vorrichtung anhand der Zeichnung näher erläutert. Darin zeigen:
- Fig. 1: eine Draufsicht auf die Vorrichtung;
- Fig. 2: eine perspektivische Ansicht der Trenneinrichtung der Vorrichtung nach Fig. 1;
- Fig. 3: eine Draufsicht auf den Schlitten der Trenneinrichtung nach Fig. 2 mit teilweise weggelassenen Teilen; und
- Fig. 4: einen Schnitt entlang der Linie IV-IV in Fig. 3.

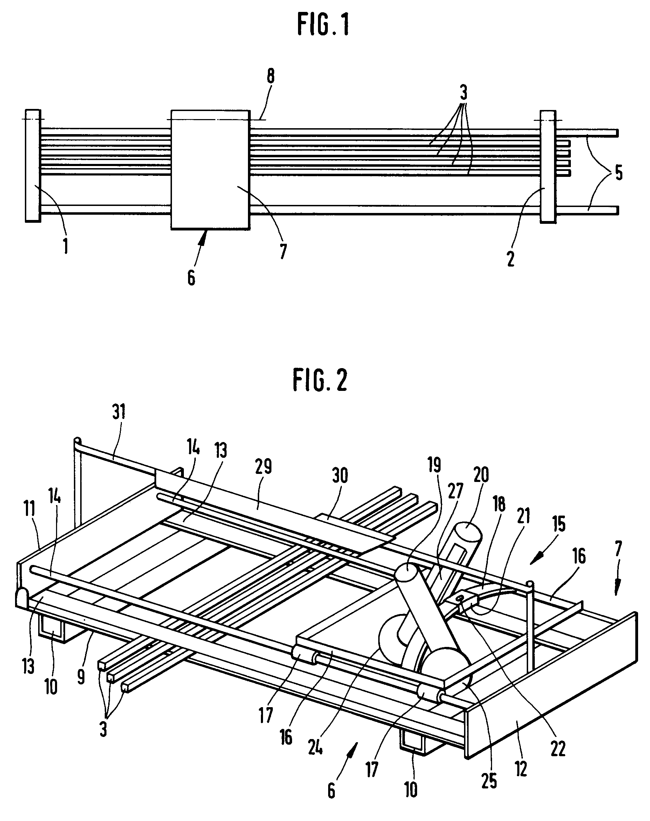

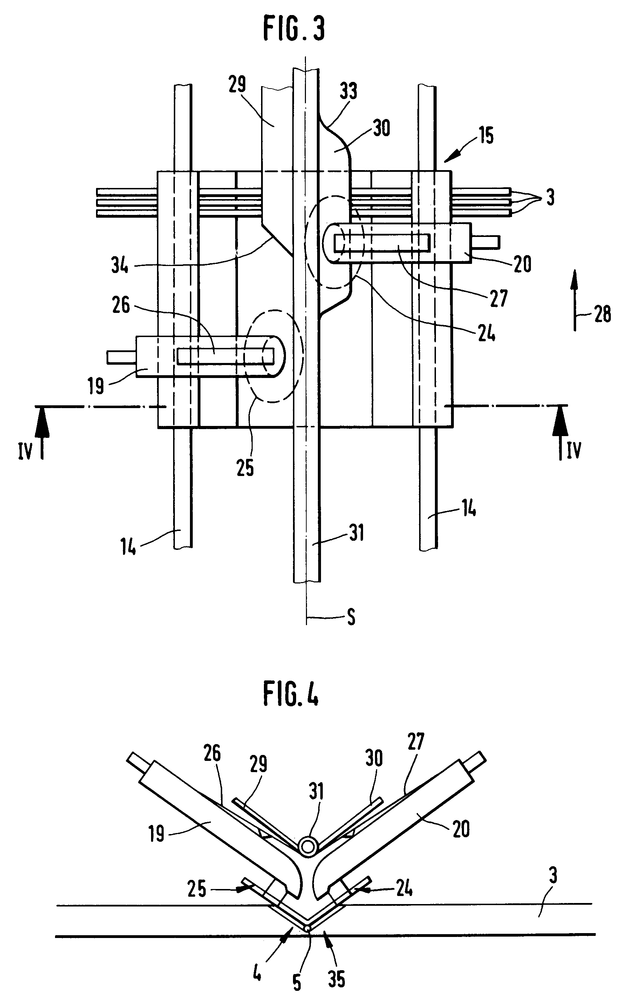

Gemäß Fig. 1 weist die Vorrichtung eine Einspanneinrichtung aus zwei Zangen 1 und 2 auf. Damit können mehrere Profilstäbe 3 parallel nebeneinander eingespannt und mit winkelförmigen Ausnehmungen 4 (Fig. 4) versehen werden. Die eine Zange 1 ist stationär und die andere Zange 2 in Profillängsrichtung verschiebbar. Die verschiebbare Stange 2 ist dazu auf zwei zu den Hohlprofilstäben 1 parallel verlaufenden Führungsschienen 5 gelagert.

Zwischen den beiden Zangen 1 und 2 ist auf den Führungsschienen 5 eine Trenneinrichtung 6 verschiebbar.

Die Trenneinrichtung 6 weist ein Oberteil 7 auf, das um eine parallel zu den Führungsschienen 5 verlaufende Achse 8 an einem Unterteil angelenkt ist. Zwischen dem Oberteil 7 und dem Unterteil sind die im Querschnitt rechteckigen Hohlprofilstäbe 3 angeordnet, die mit einer winkelförmigen Ausnehmung 4 versehen werden sollen, wie aus Fig. 4 ersichtlich.

Das Unterteil weist Führungen auf, so daß die Trenneinrichtung entlang der Führungsschienen 5 verschiebbar ist (Fig. 1). Insoweit stimmt die Vorrichtung mit der in der DE 44 01 667 A1 dargestellten und beschriebenen Vorrichtung überein.

Die Trenneinrichtung 6 ist in Fig. 2 bis 4 näher dargestellt. Das Oberteil 7 besteht danach aus einem Rahmen aus zwei Endplatten 11, 12, die durch Querstege 13 miteinander verbunden sind. Die Endplatte 12 ist mit dem Unterteil 9 durch eine nicht dargestellte Einrichtung zur Fixierung der Profilstäbe 3 zwischen Ober- und Unterteil 7, 9 verspannbar.

Zwischen den Endplatten 11, 12 erstrecken sich Führungsschienen 14, auf denen ein rahmenförmiger Schlitten 15 geführt ist, der an seinen beiden Seitenabschnitten 16 Führungen 17 für die Führungsschienen 14 aufweist.

Zwischen den beiden Seitenabschnitten 16 des rahmenförmigen Schlittens 15 erstreckt sich eine kreisbogenförmige Brücke 18 mit der Schneidlinie S (Fig. 3 und 4) als Kreismittelpunkt.

An der Brücke 18 sind zwei Trennschleifer 19 und 20 befestigt. Jeder Trennschleifer 19, 20 weist dazu, wie beim Trennschleifer 20 zu sehen, eine entlang der Brücke 18 verschiebbare Führung 21 auf. Die Brücke 18 ist mit einer nicht dargestellten Gradeinteilung versehen. Durch eine Fixierschraube 22 ist die Führung 21 bei der gewünschten Winkeleinstellung des Schleifers 20 an der Brücke 18 feststellbar.

Zur Einstellung der Neigung der Trennschleifer 19 und 20 gegenüber den Profilstäben 3 und damit des Keilwinkels der Ausnehmung 4 sind selbstverständlich auch andere einfache Lösungen als die mit der kreisbogenförmigen Brücke 18 möglich.

Die Trennschleifer 19, 20 sind mit Sägeblättern 24, 25 versehen. Vorzugsweise werden mit Druckluft betriebene Trennschleifer 19, 20 verwendet. Zu ihrer Betätigung sind sie mit einer Druckschalttaste 26, 27 versehen. Derartige druckbetriebene Trennschleifer sind im Handel erhältlich.

Der Schlitten 15 kann entweder manuell verschoben werden, oder mit einem nicht dargestellten pneumatischen Arbeitszylinder.

Zur automatischen Betätigung der Schalttasten 26, 27 bei Bewegung des Schlittens 15 in Richtung der Profilstäbe 3 gemäß dem Pfeil 28 in Fig. 3 sind an den Druckschalttasten 26, 27 angreifende Niederdrücker 29, 30 vorgesehen

Die Niederdrücker 29, 30 sind plattenförmig ausgebildet und mit keilförmigen Enden versehen, damit die Tasten 26, 27 daran nicht hängenbleiben. Die Niederdrücker 29, 30 sind an einer Stange 31 befestigt, die an den Endplatten 11, 12 befestigt ist.

Wie insbesondere aus Fig. 3 ersichtlich, sind die Niederdrücker 29, 30 so gegenüber einander versetzt an der Stange 31 befestigt, daß die beiden Trennschleifer 19, 20 bei Bewegung des Schlittens 15 in Richtung des Pfeiles 28 nacheinander betätigt werden. D. h., in der in Fig. 3 dargestellten Stellung ist der Trennschleifer 20 durch Angriff des Niederdrückers 30 an dem Schalter 27 in Betrieb gesetzt, um den Schnitt an der einen Seite der winkelförmigen Ausnehmung 4 der Profilstäbe 3 durchzuführen. Bei Fortbewegung des Schlittens 15 gemäß dem Pfeil 28 wird der Trennschleifer 20 ausgeschaltet, sobald er die Endkante 33 des Niederdrückers 30 erreicht hat. Damit wird der Trennschleifer 20 ausgeschaltet.

Zum gleichen Zeitpunkt erreicht der Trennschleifer 19 die vordere Endkante 34 des Niederdrückers 29, so daß der Schalter 26 betätigt und damit der Trennschleifer 19 eingeschaltet wird.

Dies hat vor allem folgenden Grund: Die erfindungsgemäße Vorrichtung ist hauptsächlich für kleinere Gewerbebetriebe gedacht. Ein Großteil von ihnen hat jedoch eher ein bescheidenes Druckluftangebot. Ein druckluftbetriebener Trennschleifer benötigt jedoch relativ viel Druckluft, so daß ein sparsames Umgehen damit geboten ist. Durch die Niederdrücker 29, 30 wird nun erreicht, daß stets nur ein Winkeltrennschleifer 19 bzw. 20 läuft, und zwar ohne daß ein pneumatischer Hauptschalter passiert werden muß, also die beiden Trennschleifer 19, 20 direkt an die Hauptleitung angeschlossen werden können.

So gesteuert, kann jeder Trennschleifer 19, 20 für sich direkt aus der Druckluft-Haupt-Zuleitung angespeist werden. Ist in dem Betrieb ausreichend Druckluft vorhanden, kann das Gerät auch so ausgeführt werden, daß über ein Hauptventil mittels Druckluft auch das Ein-, Aus- und Umschalten von einem zum anderen Winkelschleifer 19, 20 gesteuert wird.

Das Einschalten der Trennschleifer 19, 20 nacheinander hat ferner den Vorteil, daß aufgrund der geringeren Laufzeit eine längere Lebensdauer der Trennschleifer 19, 20 erreicht werden kann.

Es dürfen nur soviele Profilstäbe 3 in die Vorrichtung eingelegt werden, daß keine Verringerung der Umlaufgeschwindigkeit der Sägeblätter 24, 25 erfolgt. Solange bleibt die Verzahnung der Sägeblätter 24, 25 ohne jedwede Verklebung und Verschmutzung, so daß auch der Sägeblattreinigung wenig Beachtung geschenkt zu werden braucht.

Damit in das Hohlprofil eine winkelförmige Ausnehmung 4 geschnitten werden kann, so daß die Außenwand 35 des Hohlprofils 3 stehenbleibt (Fig. 4), ist es erforderlich, daß die beiden hintereinander angeordneten Sägeblätter 24, 25 eine gemeinsame, parallel zur Schlittenbewegungsrichtung 28 verlaufende Tangente besitzen, welche die Schneidlinie S bildet.

Mit der erfindungsgemäßen Vorrichtung erfolgt der Schnitt durch die dünnwandigen Profilstäbe 3 extrem schnell und damit ohne jeden Grat, auch wenn die Seitenwände der Profilstäbe 3 mit einer gegebenenfalls durch ein Abdeckband abgedeckte Dichtmasse versehen sind. Da die Zähne der Sägeblätter 24, 25 sehr klein und die Sägeblätter 24, 25 dünn sind, fallen auch keine Späne im eigentlichen Sinne an, eher könnte man es als Staub bezeichnen.

## Patentansprüche

1. Vorrichtung zur Bildung einer winkelförmigen Ausnehmung in einem dünnwandigen Profilstab mit einer an einem quer zum Profilstab verschiebbaren Schlitten angeordneten Trenneinrichtung, dadurch gekennzeichnet, daß die Trenneinrichtung durch zwei Sägen mit rotierenden Sägeblättern (24, 25) gebildet wird, deren Blattebenen entsprechend dem Winkel der einen bzw. anderen Seite der winkelförmigen Ausnehmung (4) ausgerichtet und welche in Schlittenbewegungsrichtung (28) hintereinander angeordnet sind, wobei die beiden Sägeblätter (24, 25) zur Bildung einer gemeinsamen Schneidlinie (S) eine gemeinsame parallel zur Schlittenbewegungsrichtung (28) verlaufende Tangente aufweisen.

2. Vorrichtung nach Anspruch 1, dadurch gekennzeichnet, daß die beiden Sägen durch Trennschleifer (19, 20) gebildet sind.

3. Vorrichtung nach Anspruch 2, dadurch gekennzeichnet, daß die Trennschleifer (19, 20) druckluftbetrieben sind.

4. Vorrichtung nach Anspruch 3, dadurch gekennzeichnet, daß die Trennschleifer (19, 20) Druckschalter (26, 27) aufweisen und entlang des Bewegungsweges des Schlittens (15) ein Niederdrücker (29, 30) zur Betätigung der Druckschalter (26, 27) vorgesehen ist.

5. Vorrichtung nach Anspruch 4, dadurch gekennzeichnet, daß die Niederdrücker (29, 30) gegenüber einander so angeordnet sind, daß die Trennschleifer (19, 20) nacheinander betätigt werden.

6. Verwendung der Vorrichtung nach einem der vorstehenden Ansprüche zur Herstellung der Gehrungsausnehmungen (4) eines Abstandshalterrahmens einer Isolierscheibe.
